(19) Europäisches Patentamt / European Patent Office / Office européen des brevets

(11) **EP 3 113 050 A1**

(12) **EUROPEAN PATENT APPLICATION**
published in accordance with Art. 153(4) EPC

(43) Date of publication:
04.01.2017 Bulletin 2017/01

(51) Int Cl.:
*G06F 17/30* (2006.01)     *G06Q 30/06* (2012.01)

(21) Application number: 15755738.0

(22) Date of filing: 19.01.2015

(86) International application number:
PCT/JP2015/051245

(87) International publication number:
WO 2015/129334 (03.09.2015 Gazette 2015/35)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 28.02.2014 JP 2014038525

(71) Applicant: **Fujifilm Corporation**
**Minato-ku**
**Tokyo 106-8620 (JP)**

(72) Inventor: **YONAHA, Makoto**
**Tokyo 107-0052 (JP)**

(74) Representative: **Klunker . Schmitt-Nilson . Hirsch**
**Patentanwälte**
**Destouchesstraße 68**
**80796 München (DE)**

(54) **PRODUCT SEARCH DEVICE, PRODUCT SEARCH SYSTEM, SERVER SYSTEM, AND PRODUCT SEARCH METHOD**

(57) The present invention provides a product search apparatus, a product search system, a server system, and a product search method capable of accurately calculating a relationship between a sensibility word representing a feature of an image of a product and a physical measurement value without performing a questionnaire survey and accurately performing searching for a product based on a sensibility word. In a preferred aspect of the present invention, in a product search apparatus in which, if a search based on a sensibility word of a product is received from a user, the received sensibility word is converted into the physical measurement value based on a relationship between the received sensibility word and the physical measurement value, and a corresponding product group is searched for from a product database based on the converted physical measurement value, the sensibility word of the product received at the time of searching and the physical measurement value of the image of the product for which request content of a user is received are recorded in association with each other if a request such as an order for any of products in the product group that has been searched for is performed. Accordingly, it is possible to associate the sensibility word indicating the feature of the image of the product with the physical measurement value of the image of the product without performing a questionnaire survey.

FIG. 5

EP 3 113 050 A1

**Description**

**BACKGROUND OF THE INVENTION**

1. Field of the Invention

The present invention relates to a product search apparatus, a product search system, a server system, and a product search method, and more particularly, to a technology for associating a sensibility word indicating a feature of an image of a product with a physical measurement value of the image of the product.

2. Description of the Related Art

In a case in which a product such as clothing is searched for on an electronic commerce (EC) site on the Internet, products can be generally narrowed down by designating a price, a size, or a color, and the like. For example, if a user designates a color of desired clothing on a web page, a list of clothing images related to the designated color is displayed. The user can select a desired clothing image from the displayed list of clothing images to buy clothing of the selected image.

However, there may be a case in which the colors that can be selected by users on an EC site are limited, and the users may not be able to designate an exact desired color. Further, since a user often chooses a product based on a vague impression at the time of purchase in a real store or the like, it is not necessarily desirable to perform product searching based on a specific color from the viewpoint of encouraging purchase of a product.

In searching for product images based on the color or the like, a product matching a color or an impression actually desired by a user may not necessarily be presented in search results. Therefore, various search technologies based on information other than the color have been proposed.

JP1996-249351A (JP-H08-249351A) proposes an image search apparatus that detects a product image based on a physical feature amount such as the number of colors, a color distribution, and the contrast of a product image, and a sensitive feature amount that is used for a user (designer) to specify an impression of any product, such as warm/cold, masculine/feminine, stability/instability, symmetrical/asymmetrical, or simplicity/complexity.

Here, a large number of images as search targets are stored with a physical feature amount and/or a sensitive feature amount thereof. Further, a mapping rule that defines a correlation between the physical feature amount and the sensitive feature amount is created using a statistical scheme, and the sensitive feature amount of the image as a search target is obtained by converting the physical feature amount of the image into the sensitive feature amount using the mapping rule.

The mapping rule is created from a relationship between a sensitive feature amount and a physical feature amount by performing extraction of the sensitive feature amount by performing a questionnaire survey for an appropriate number of (for example, 100) designers or general consumers on 50 sample analysis images, and mechanically performing extraction of the physical feature amount through a computer process.

JP1997-114853A (JP-H09-114853A) proposes an image search apparatus that designates a similar image similar to a desired image from among a plurality of candidate images, modifies a physical feature amount of the designated similar image with an input sensibility word such as "sharp", "soft", or "modern" representing a difference between the designated similar image and the desired image if the sensibility word is input, selects an image having a physical feature amount close to the modified physical feature amount, and sets the image as a new candidate image.

Further, a relationship between the physical feature amount of the product image and the sensibility word received from the product image is obtained based on a questionnaire performed on a large number of subject persons.

**SUMMARY OF THE INVENTION**

As means for enabling a user (a customer) to simply search for a desired product, a scheme of using a sensibility word as a search word is effective, but there is a problem in that the accuracy of searching based on the sensibility word is degraded in a case in which an association between a sensibility word representing a feature of an image of a product and a physical measurement value (physical feature amount) obtained by analyzing the image of the product is not accurate.

In both of the inventions described in JP1996-249351A (JP-H08-249351A) and JP1997-114853A (JP-H09-114853A), a relationship between the sensibility word received from the product image and the physical feature amount of the product image is obtained by performing a questionnaire survey for an appropriate number of (for example, 100) designers or general consumers on approximately 50 sample images, but there is a problem in that it is necessary to perform the questionnaire survey for a large number of designers or general consumers on a large number of sample images in order to determine an association between the sensibility word received from the product image and the physical feature value of the product image more accurately, and the questionnaire survey is very complicated.

Further, an impression represented by a sensibility word changes according to a period in time, and is different between users. That is, products associated from the same sensibility word may change over time, and products associated from the same sensibility word may be different. Further, products associated from the sensibility word may be different as a preference changes over time for a specific user.

The present invention has been made in view of the above circumstances, and an object thereof is to provide a product search apparatus, a product search system, a server system, and a product search method capable of accurately calculating a relationship between a sensibility word representing a feature of an image of a product and a physical measurement value without performing a questionnaire survey and accurately performing searching for a product based on a sensibility word.

In order to achieve the above object, a product search apparatus according to an aspect of the present invention is a product search apparatus that searches for a product desired by a user from a product database in which a search target product and a physical measurement value of the image of the product obtained by analyzing the image of the product are recorded in association with each other, the product search apparatus comprising: a recording unit that records a sensibility word representing a feature of the image of the product and a physical measurement value of the image of the product in association with each other; a search reception unit that receives a search for the product based on the sensibility word from the user; a conversion unit that converts the received sensibility word into the physical measurement value based on a relationship between the sensibility word and the physical measurement value recorded in the recording unit; a search unit that searches for a corresponding product group from the product database based on the physical measurement value converted by the conversion unit; an output unit that outputs the product group searched for by the search unit; and a request reception unit that receives request content for any of the products in the output product group, wherein the recording unit records the sensibility word of the product received by the search reception unit and the physical measurement value of the image of the product for which the request content is received in association with each other.

According to the aspect of the present invention, if the search based on the sensibility word of the product is received from the user, the received sensibility word is converted into the physical measurement value based on the relationship between the received sensibility word and the physical measurement value, and a corresponding product group is searched for from the product database based on the converted physical measurement value. If a request for any of the products in the product group searched for in this manner is performed by the user, the sensibility word of the product received at the time of searching and the physical measurement value of the image of the product for which the request content of the user is received are recorded in association with each other. That is, it is possible to record the sensibility word used for searching and the physical measurement value of the image of the product for which the request content is received in association with each other through the search based on the sensibility word of the user and the request from the user, to associate the sensibility word indicating the feature of the image of the product with the physical measurement value of the image of the product without performing a questionnaire survey, and to record an enormous amount of information (big data) since the association between the sensibility word and the physical measurement value of the image of the product for each of search operations and request operations of a large number of users is recorded.

In the product search apparatus according to another aspect of the present invention, the conversion unit includes a calculation unit that analyzes the association between the sensibility word and the physical measurement value recorded in the recording unit, and calculates a conversion table or a conversion equation representing a relationship between the sensibility word and the physical measurement value, and converts the received sensibility word into the physical measurement value based on the conversion table or the conversion equation calculated by the calculation unit. By analyzing the association (big data) between enormous sensibility words and the physical measurement values recorded in the recording unit, it is possible to calculate the conversion table or the conversion equation representing the relationship between the sensibility word and the physical measurement value with high accuracy.

In the product search apparatus according to still another aspect of the present invention, it is preferable that the calculation unit analyzes the association between the sensibility word and the physical measurement value recorded in the recording unit in a latest certain period of time, calculates a conversion table or a conversion equation representing a relationship between the sensibility word and physical measurement value, and performs updating with the calculated conversion table or conversion equation. Accordingly, even when the relationship between the sensibility word and the physical measurement value changes over time, it is possible to calculate the conversion table or the conversion equation representing the relationship between the sensibility word and the physical measurement value corresponding to such a change, and perform updating.

In the product search apparatus according to still another aspect of the present invention, it is preferable for the recording unit to record the sensibility word of the product received by the search reception unit and the physical measurement value of the image of the product for which the request content is received in association with each other, and to record at least one of the request content or a user attribute in association with each other.

In the product search apparatus according to still another aspect of the present invention, it is preferable for the request content to include at least one of an order, a viewing request for detailed information of the product, a delivery time instruction request, a delivery time confirmation request, a size selection request, an evaluation indicating a high evaluation, a recommendation to others, or mail forwarding.

In the product search apparatus according to still another aspect of the present invention, it is preferable that the calculation unit performs weighting according to the simultaneously recorded request content on the association between the sensibility word and the physical measurement value recorded in the recording unit, and calculates the conversion table or the conversion equation based on the weighted association between the sensibility word and the physical measurement value. For example, in a case in which the request content is an order, this means that the user has decided on a purchase, and accordingly, it is preferable for the association between the same sensibility word and the physical measurement value to be greatly weighted in comparison with a viewing request to simply view the detailed information of the product.

In the product search apparatus according to still another aspect of the present invention, it is preferable for the user attributes to include at least one of user identification information, gender, age, race, nationality, religion, or sect.

The product search apparatus according to still another aspect of the present invention further comprises a user attribute reception unit that receives a user attribute, and the calculation unit can extract an association of the sensibility word and the physical measurement value associated with the user attribute received by the user attribute reception unit among the sensibility words and the physical measurement values recorded in the recording unit, and calculate the conversion table or the conversion equation based on the extracted association between the sensibility word and the physical measurement value. Products associated from the same sensibility word are different according to users. However, according to still another aspect of the present invention, it is possible to calculate the conversion table or the conversion equation for each user attribute, perform highly accurate conversion from the sensibility word to the physical measurement value, and perform the search based on the sensibility word more accurately.

In the product search apparatus according to still another aspect of the present invention, the calculation unit calculates a representative physical measurement value representative of the sensibility word based on a plurality of correspondence relationships between the sensibility word and the physical measurement value recorded in the recording unit, and calculates a conversion table or a conversion equation for performing conversion using a physical measurement value in a predetermined range including the calculated representative physical measurement value as a physical measurement value for the sensibility word. A most frequent value, an average value, a centroid, and the like among the physical measurement values associated with the same sensibility word may be considered as the representative physical measurement value representative of the sensibility word. Therefore, if the representative physical measurement value representative of the sensibility word is changed, the conversion table or the conversion equation changes.

In the product search apparatus according to still another aspect of the present invention, the physical measurement value is at least one of a color feature amount, a shape feature amount, a pattern feature amount, or a texture feature amount of the image of the product. For example, a RGB value in an RGB color system defined by the International Electrotechnical Commission (IEC), of the representative color in the image of the product, three attributes (hue, lightness, and chroma) of a Munsell color system, or a tristimulus value (X, Y, Z) of a CIE XYZ color system adopted by the International Commission on Illumination (CIE) can be considered as the color feature amount. For example, a feature amount defined by a pattern density and a pattern size may be considered as the pattern feature amount, and, for example, a feature amount defined by a degree of gloss and a degree of transparency may be considered as the texture feature amount.

It is preferable that the product search apparatus according to still another aspect of the present invention further comprises: an image alignment unit that aligns the images of the product group that is searched for, in a space using size and price as coordinate axes, and the output unit outputs the images of the product group aligned by the image alignment unit. Accordingly, it is possible to search for a desired product according to a size and a price from among the aligned images of the product group.

A product search system according to still another aspect of the present invention is a product search system comprising the product search apparatus and a user terminal, wherein the user terminal includes a sensibility word selection unit that outputs a sensibility word to the product search apparatus through a user operation at the time of a search for a product; a display unit that displays an image indicating the product group output from the output unit of the product search apparatus; and a request operation unit that outputs the request content for a desired product to the product search apparatus based on the images of the product group displayed on the display unit.

A server system according to still another aspect of the present invention is a server system which is connected to a user terminal over a network, and searches for a product desired by a user from a product database in which a search target product and a physical measurement value of the image of the product obtained by analyzing the image of the product are recorded in association with each other, the server system comprising: a recording unit that records a sensibility word representing a feature of the image of the product and a physical measurement value of the image of the product in association with each other; a sensibility word reception unit that receives a sensibility word from the user terminal over the network; a conversion unit that converts the received sensibility word into the physical measurement value based on a relationship between the sensibility word and the physical measurement value recorded in the recording unit; a search unit that searches for a corresponding product group from the product database based on the physical measurement value converted by the conversion unit; a transmission unit that transmits the product group searched for by the search unit to the user terminal; and a request reception unit that receives request content for any of the products in the transmitted product group from the user terminal, wherein the recording unit records the sensibility word of the product received by the sensibility word reception unit and the physical measurement value of the image of the product received by the request reception unit in association with each other.

A product search method according to still another aspect of the present invention is a product search method of searching for a product desired by a user from a product database in which a search target product and a physical measurement value of the image of the product obtained by analyzing the image of the product are recorded in association with each other, the product search method comprising: a process of preparing a recording unit that records a sensibility word representing a feature of the image of the product and a physical measurement value of the image of the product in association with each other; a search reception process of receiving a search for the product based on the sensibility word from the user; a conversion process of converting the received sensibility word into the physical measurement value based on a relationship between the sensibility word and the physical measurement value recorded in the recording unit; a search process of searching for a corresponding product group from the product database based on the physical measurement value converted through the conversion process; a process of outputting the product group searched for through the search process; and a process of receiving request content for any of the products in the output product group, wherein the search reception process includes recording the sensibility word of the product received through the search reception process and the physical measurement value of the image of the product for which the request content is received, in the recording unit, in association with each other.

According to the present invention, it is possible to automatically acquire the relationship between the sensibility word indicating the feature of the image of the product and the physical measurement value of the image of the product in connection with an operation of product searching by a user, accurately calculate the relationship between the sensibility word indicating the feature of the image of the product and the physical measurement value without performing a questionnaire survey for designers or the like on sample images in advance, and accurately perform searching for the product based on the sensibility word.

## BRIEF DESCRIPTION OF THE DRAWINGS

Fig. 1 is a conceptual diagram of a search system.
Fig. 2 is a block diagram illustrating an example of a functional configuration of a user terminal.
Fig. 3 illustrates an example of an input screen for user identification data displayed on a display unit of the user terminal.
Fig. 4 illustrates an example of a display unit of the user terminal in which a plurality of sensibility words (candidates for search word) are displayed.
Fig. 5 is a block diagram illustrating an example of a functional configuration of a server system.
Fig. 6 is a data structure conceptual diagram illustrating a correspondence relationship between user identification data and user attribute data stored in a user information database.
Fig. 7 is a data structure conceptual diagram illustrating an example of configuration data of the user attribute data.
Fig. 8 is a data structure conceptual diagram illustrating a correspondence relationship between user attribute data and a conversion table stored in a conversion table database.
Fig. 9 is a data structure conceptual diagram illustrating an example of configuration data of a conversion table.
Fig. 10 is a conceptual diagram illustrating a relationship between sensibility word data (sensibility space) and a physical measurement value (physical measurement space) defined by a conversion table.
Fig. 11 is a diagram illustrating a language image scale indicating sensibility words arranged in a sensibility space.
Fig. 12 is a diagram illustrating a monochromatic image scale of single color (130 colors) arranged in the sensibility space.
Fig. 13 is a data structure conceptual diagram of a product database.
Figs. 14A to 14D illustrate examples of a display aspect of image data of a product acquired by an image search unit.
Fig. 15 is a diagram illustrating a list of recording data items recorded in a recording data table.
Figs. 16A and 16B are diagrams illustrating a relationship between a specific sensibility word and a physical measurement value recorded in a recording table, and a relationship between a specific sensibility word and a physical measurement value shown in a conversion table of a conversion table database.
Fig. 17 is a histogram illustrating a relationship between a physical measurement value recorded in association with a specific sensibility word and the number (frequency) of products having the physical measurement value registered in the recording data table.

Fig. 18 is a flowchart illustrating a search process and a process of generating a recording data table.

Fig. 19 is a flowchart illustrating a process of creating and updating a conversion table in a conversion table calculation unit.

## DESCRIPTION OF THE PREFERRED EMBODIMENTS

Hereinafter, embodiments of a product search apparatus, a product search system, a server system, and a product search method according to the present invention will be described with reference to the accompanying drawings. In the following embodiments, an example in which "clothing ornament and, particularly, clothing" are search target products will be described, but the present invention is not limited thereto and the present invention can also be applied to a case in which any other product is searched for.

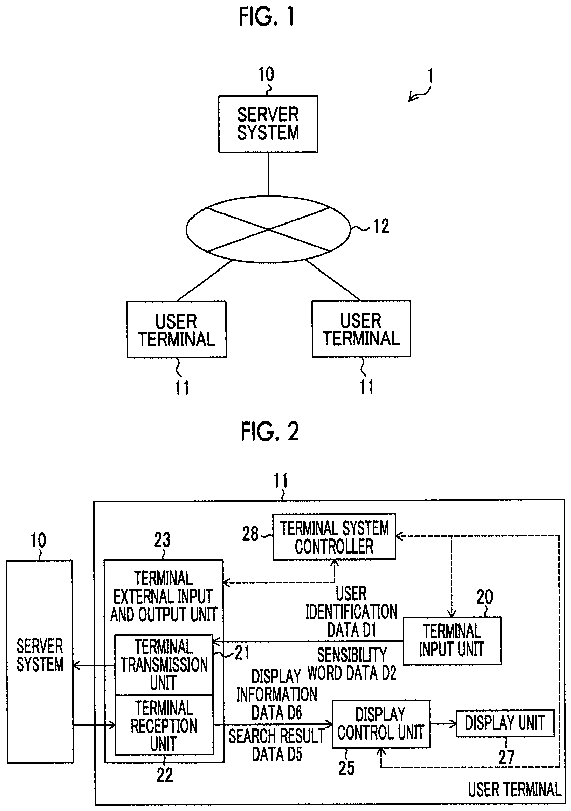

Fig. 1 is a conceptual diagram of a search system 1. The search system 1 according to this embodiment includes user terminals 11, and a server system 10 connected to each of the user terminals 11 over a network 12 such as the Internet.

The user terminal 11 is a terminal that a user operates when searching for a product such as clothing and is, for example, has a form such as a portable terminal such as a smartphone or a tablet device, or a personal computer.

The server system 10 performs product search in response to a command transmitted from the user terminal 11, and returns a search result to the user terminal 11.

A functional configuration of the user terminal 11 in the search system 1 will first be described.

Fig. 2 is a block diagram illustrating an example of a functional configuration of the user terminal 11.

The user terminal 11 of this example mainly includes a terminal input unit 20, a terminal external input and output unit 23 (a terminal transmission unit 21 and a terminal reception unit 22), a display control unit 25, a display unit 27, and a terminal system controller 28.

The terminal input unit 20 includes an operation unit that is directly operated by the user so as to input data such as user identification information (a user ID), a password, or a search word (search basic information), and an information specifying unit that specifies the data such as a user ID, a password, or search basic information input via the operation unit.

The user ID and the password are data for specifying the user who operates the user terminal 11. One or a combination of both of the user ID and the password is hereinafter also referred to as "user identification data D1". The "search word (search basic information)" is a term indicating a feature of a product desired by the user, and in this embodiment, sensibility word data D2 is used as the search word. The sensibility word data D2 is data indicating a sensitive term (sensibility word), and the sensibility word data D2 as the search word represents an impression that the user expects from a search product.

For example, in a case in which the user terminal 11 is a portable terminal such as a smartphone, buttons or a touch panel provided in the user terminal 11 can be used as the operation unit, and an information specifying unit specifies sensibility word data selected by the operation unit. The user may input data using any scheme through the operation unit, may directly input data, or may input desired data by selecting one or more data items from among a plurality of candidates displayed on the display unit 27.

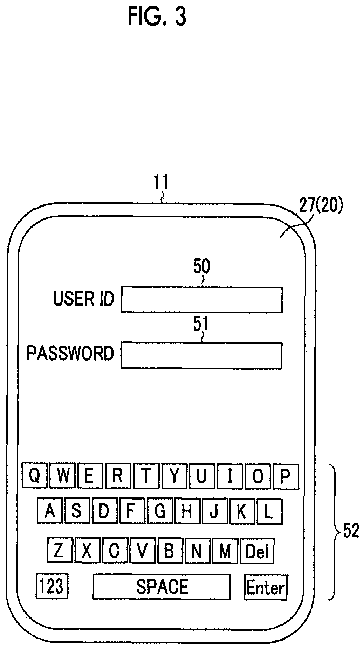

Fig. 3 illustrates an example of an input screen of the user identification data D1 displayed on the display unit 27 of the user terminal 11. In this example, a portable terminal in which a touch panel provided in the display unit 27 is a user operation unit (the terminal input unit 20) is the user terminal 11.

The user inputs the user ID and the password set for each user to the user terminal 11 for authentication of an appropriate user. In the example illustrated in Fig. 3, a user ID data input field 50, a password input field 51, and a software keyboard 52 are displayed on the display unit 27. The user ID data input field 50 is a field to which the user inputs a user ID, and a password input field 51 is a field to which the user inputs a password. The user inputs an assigned user ID to the user ID data input field 50 and inputs a password to the password input field 51 using the software keyboard 52.

The software keyboard 52 includes any character palette and a touch panel (display unit 27) that are displayed on the display unit 27. If a user touches a place corresponding to each character palette displayed on the display unit 27 of the touch panel, a character or the like corresponding to the touched position is input to the user ID data input field 50 or the password input field 51. The character palette displayed on the display unit 27 as the software keyboard 52 is not particularly limited, and not only input characters such as Hiragana, alphabets, numbers, or symbols, but also function keys such as a space key, an enter key, a delete key, and a display switching key can be displayed on the display unit 27 as the software keyboard 52.

For example, the touch panel (display unit 27) in a position corresponding to the user ID data input field 50 is touched by the user. Accordingly, the user terminal 11 can transition to a user ID input mode, and the user can input the user ID to the user ID data input field 50 using the software keyboard 52. Similarly, for example, if the touch panel in a position corresponding to the password input field 51 is touched by the user, the user terminal 11 transitions to a password input mode, and the user can input a password to the password input field 51 using the software keyboard 52. When a position corresponding to the enter key of the software keyboard 52 is touched by the user in a state in which the user identification data and the password are input, an authentication process is performed, and a display of the display unit 27 transition to a search process screen in a case in which a result of the authentication, the user identification data, and the password are appropriate.

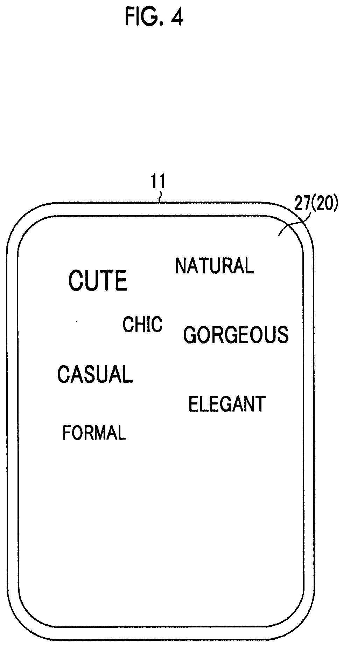

Fig. 4 illustrates an example of the display unit 27 of the user terminal 11 on which a plurality of sensibility words (candidate search words) are displayed.

The terminal input unit 20 (touch panel) of this example functions as a sensibility word selection unit that receives an instruction from the user and specifies at least one of a plurality of sensibility words displayed on the display unit 27 in response to the instruction, and specifies sensibility word data D2 indicating the specified sensibility word as sensibility word data D2 input through the terminal input unit 20. More specifically, the plurality of sensibility words that are candidates for the search word are displayed on the display unit 27 (touch panel), a position corresponding to any one of the plurality of sensibility words displayed on the display unit 27 is touched by the user, and accordingly, the sensibility word corresponding to the touch position is input as a search word.

A display aspect of the plurality of sensibility words on the display unit 27 is not particularly limited, and the plurality of sensibility words may be displayed in an orderly manner according to a predetermined rule on the display unit 27 or may be displayed at random. Further, the display of the plurality of sensibility words on the display unit 27 may be a so-called "tag cloud" display, or display sizes of the sensibility words on the display unit 27 may be different from each other. In the example of Fig. 4, a sensibility word "cute" is displayed in a largest size, sensibility words "casual" and "gorgeous" are displayed in a smaller size, sensibility words "chic", "natural", and "elegant" are displayed in much smaller size, and a sensibility word "formal" is displayed in a smallest size.

Further, a plurality of sensibility words displayed on the display unit 27 may be determined in advance or may be changed for each search process. Further, a plurality of sensibility word data displayed on the display unit 27 may be stored in the user terminal 11 in advance or may be transmitted from the server system 10 to the user terminal 11 (the display control unit 25 (see Fig. 2)). In this case, the display control unit 25 may display candidates (a plurality of sensibility words) of the search word in a tag cloud form on the display unit 27 based on the sensibility word data transmitted from the server system 10 via the terminal external input and output unit 23 (the terminal reception unit 22) in each search process. Further, a plurality of sensibility words data transmitted from the server system 10 to the user terminal 11 is not particularly limited and may be changed according to, for example, a frequency of designation as the search word in the search process in the server system 10, an attribute of the user, or the like.

The terminal transmission unit 21 (see Fig. 2) transmits data such as the user identification data D1 and the sensibility word data D2 (search word) specified by the user through the terminal input unit 20, to the server system 10 over the network 12 (see Fig. 1). Further, the terminal reception unit 22 receives the data such as "image data indicating a product group in a search result" and "display information data" to be described below which is transmitted from the server system 10 over the network 12. The terminal transmission unit 21 and the terminal reception unit 22 constitute the terminal external input and output unit 23, and the terminal transmission unit 21 and the terminal reception unit 22 may be configured of the same device.

The display control unit 25 controls the display unit 27 to control the entire display of the display unit 27 and perform, for example, switching to a screen display (see Fig. 3) of a designation mode of the user identification data D1 and a screen display (see Fig. 4) of the designation mode of the sensibility word data D2 (search word) on the display unit 27. Further, the display control unit 25 displays image data of the product received by the terminal reception unit 22 on the display unit 27 according to the display information data received by the terminal reception unit 22.

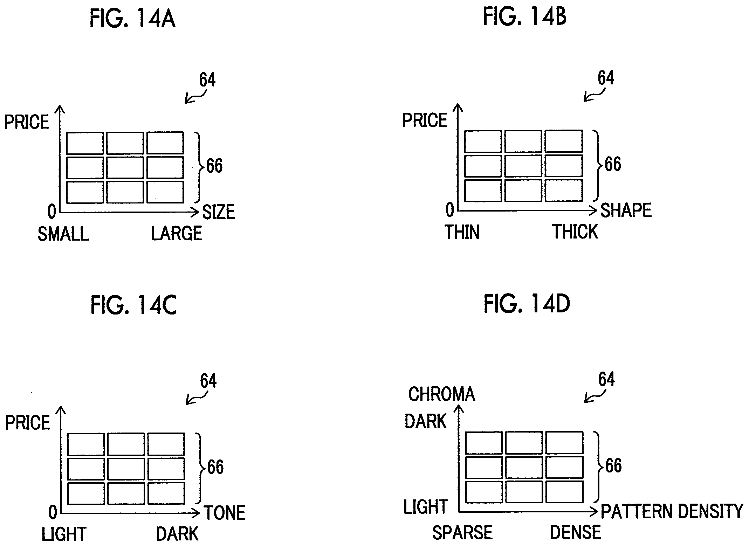

The terminal system controller 28 (see Fig. 2) controls the terminal external input and output unit 23 (the terminal transmission unit 21 and the terminal reception unit 22), the terminal input unit 20, and the display control unit 25 to cause each unit to execute the above-described process or another process, and also controls each unit (not illustrated) of the user terminal 11. For example, in the user authentication process (see Fig. 3), the terminal system controller 28 controls the terminal input unit 20 and the terminal external input and output unit 23, and transmits the user identification data D1 input by the user via the terminal input unit 20 to the server system 10 via the terminal transmission unit 21 and the network 12. Further, the terminal system controller 28 controls the terminal input unit 20, the terminal reception unit 22, and the display control unit 25, receives a result of user authentication, candidates (a plurality of sensibility word data) of the search word (see Fig. 4), the search result data D5, the display information data D6, and the like transmitted from the server system 10. A display of appropriateness of the user authentication, a tag cloud display of the search word (see Fig. 4), a display of the search product image 66 (Fig. 14), or the like on the display unit 27 is performed.

In a case in which the user operates the user terminal 11 having the above-described configuration and performs the product search as above, the user input the user identification data D1 (the user ID and the password) and the sensibility word data D2 (the search word) using the terminal input unit 20 (the touch panel). The user identification data D1 and the sensibility word data D2 input and specified by the user via the terminal input unit 20 are transmitted from the terminal input unit 20 to the terminal transmission unit 21, and transmitted to the server system 10 over the network 12 by the terminal transmission unit 21.

Further, the terminal input unit 20 of the user terminal 11 functions as a request operation unit that receives request content for any of the products from the product group displayed as the images 66 and transmits (outputs) the input request content to the server system 10 via the terminal transmission unit 21. Here, the request content for the product includes, for example, at least one of an order through a touch operation of an order and settlement button or the like, a viewing request for detailed information of the product through a touch operation or the like for the product image, a delivery time instruction request, a delivery time confirmation request, a selection request for a size such as small (S), medium (M), and large (L), an evaluation indicating a high evaluation such as "good!", a recommendation to others, or mail forwarding.

Next, a functional configuration of the server system 10 will be described.

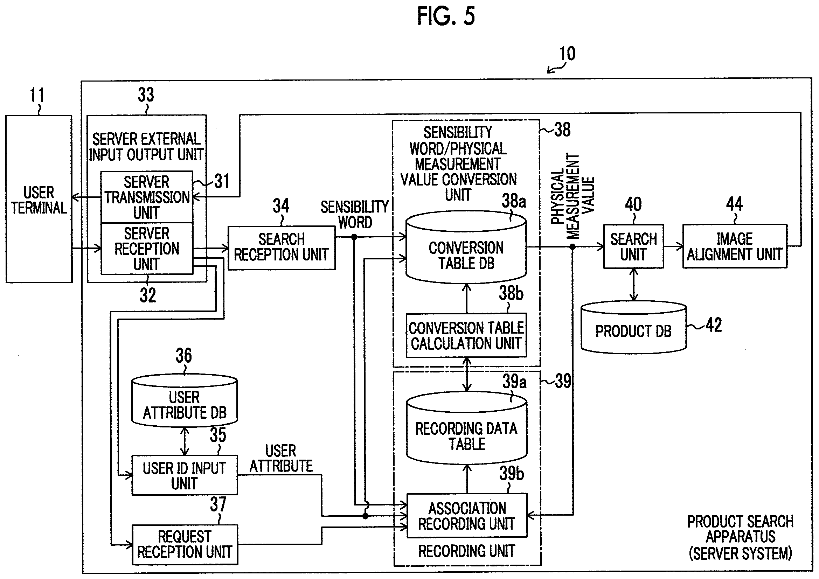

Fig. 5 is a block diagram illustrating an example of a functional configuration of the server system 10.

The server system 10 of this example is a unit that functions as a product search apparatus according to the present invention, and mainly includes a server external input and output unit 33 (a server transmission unit 31 and a server reception unit 32), a search reception unit 34, a user ID input unit 35 that is an form of a user attribute reception unit, a user attribute database (user attribute DB) 36, a request reception unit 37 that receives a request such as an order, a sensibility word/physical measurement value conversion unit (hereinafter simply referred to as "conversion unit") 38, a recording unit 39, a search unit 40, a product database (product DB) 42, and an image alignment unit 44.

The server reception unit 32 receives data such as the user identification data D1 and the sensibility word data D2 (search word) transmitted from the user terminal 11 over the network 12, a request such as an order from the user, and request information indicating an action, transmits the sensibility word data D2 to the search reception unit 34, transmits the user identification data D1 to the user ID input unit 35, and transmits the request information such as an order to the request reception unit 37.

The search reception unit 34 outputs the sensibility word data D2 (search word) that the server reception unit 32 receives from the user terminal 11 over the network 12, to the conversion unit 38 and the recording unit 39.

The user ID input unit 35 receives the user identification data D1 received by the server reception unit 32, and outputs the user attribute data D3 indicating various attributes of the user from the user attribute DB 36 to the conversion unit 38 and the recording unit 39 based on the received user identification data D1.

The user ID input unit 35 accesses the user attribute DB 36, and acquires user attribute data D3 associated with the user identification data D1 received from the user terminal 11 via the network 12 and the server reception unit 32.

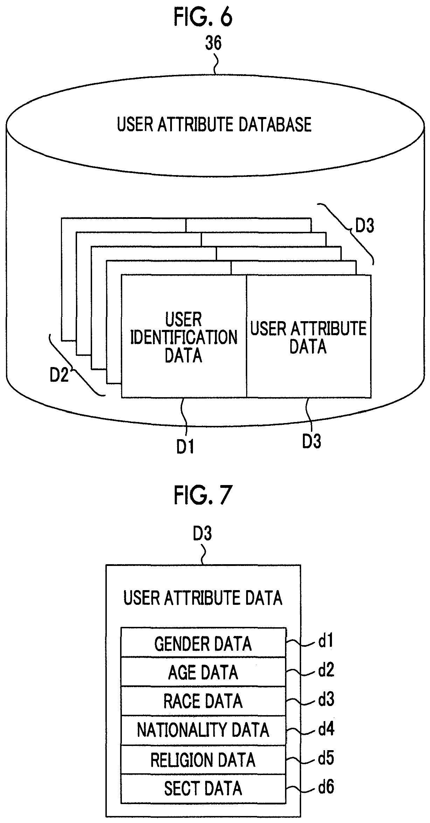

Fig. 6 is a data structure conceptual diagram illustrating a correspondence relationship between the user identification data D1 and the user attribute data D3 stored in the user attribute DB 36. Fig. 7 is a data structure conceptual diagram illustrating an example of configuration data of the user attribute data D3.

The user attribute DB 36 stores the user identification data D1 and the user attribute data D3 in association with each other. Since the user attribute data D3 is stored in association with each piece of user identification data D1 in the user attribute DB 36, if the user identification data D1 is determined, the corresponding user attribute data D3 is determined. The user attribute data D3 is not particularly limited as long as the user attribute data D3 is data indicating the attribute of the user and, for example, data based on at least one of gender data d1, age data d2, race data d3, nationality data d4, religion data d5, or sect d6 data of the user may be the user attribute data D3.

The user attribute data D3 stored in the user attribute DB 36 is previously specified by the user, and the user attribute data D3 specified by the user is stored in the user attribute DB 36 in association with the user identification data D1 (user ID) assigned to the user. For example, when the user initially uses the search system 1, the user attribute data D3 may be input to the user terminal 11 (the terminal input unit 20) together with the user identification data D1 such as a password. In this case, the user identification data D1 and the user attribute data D3 that have been input are transmitted from the user terminal 11 (the terminal transmission unit 21) to the server system 10 (the server reception unit 32), and stored in the user attribute DB 36 in association with each other.

The request reception unit 37 is a unit that receives the request information such as an order of the product desired by the user from the user terminal 11 via the network 12 and the server reception unit 32, and outputs the received request information to the recording unit 39. Here, the request information includes, for example, a viewing request for detailed information of the product, a delivery time instruction request, a delivery time confirmation request, a size (SML) selection request, an evaluation such as "good", a recommendation of a product to others, and mail forwarding, in addition to the order of the product.

The conversion unit 38 includes a conversion table DB 38a and a conversion table calculation unit 38b.

The conversion table DB 38a receives the sensibility word data D2 from the search reception unit 34, receives the user attribute data D3 from the user ID input unit 35, and first selects the conversion table T stored in association with the received user attribute data D3.

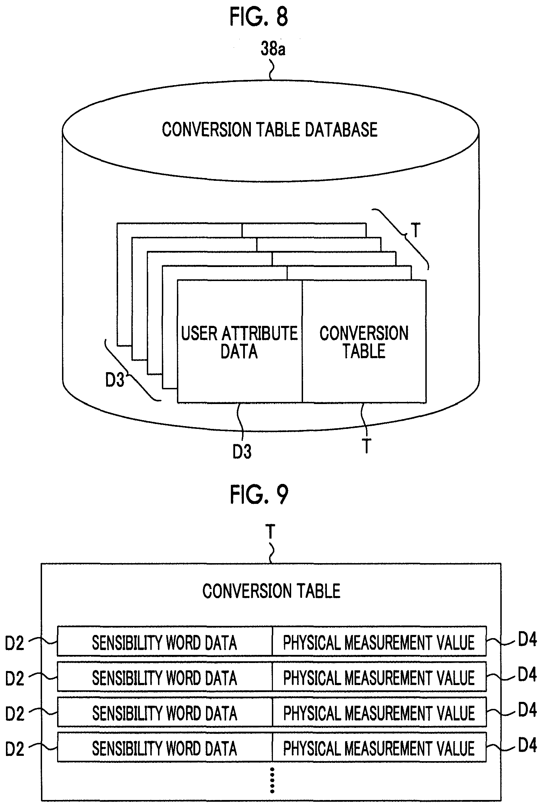

Fig. 8 is a data structure conceptual diagram illustrating a correspondence relationship between the user attribute data D3 and the conversion table T stored in the conversion table DB 38a. Fig. 9 is a data structure conceptual diagram illustrating an example of configuration data in the conversion table T.

Since the conversion table T is determined according to the user attribute data D3 and the user attribute data D3 and the conversion table T are stored in association with each other in the conversion table DB 38a, if the user attribute data D3 is determined, the corresponding conversion table T is determined. In each of the plurality of conversion tables T stored in the conversion table DB 38a, the physical amount (the physical measurement value D4) of the product and the sensibility word data D2 are associated with each other, and if the sensibility word data D2 is determined, the corresponding physical measurement value D4 is also determined.

The physical measurement value D4 of the product is not particularly limited as long as the physical amount is data indicating physical characteristics of the product, and the physical measurement value D4 may be, for example, data based on at least one of a color feature amount (for example, a RGB value of a representative color) of the image of the product, a pattern feature amount (for example, a pattern density and a pattern size a representative pattern) of the image of the product, a texture feature amount (for example, a degree of gloss and a degree of transparency) of the image of the product, or a shape feature amount of the product.

The physical measurement value D4 corresponding to one piece of sensibility word data D2 is associated with each type of color, pattern, texture, and shape as described above and, for example, the physical measurement value of the color feature amount corresponding to one piece of sensibility word data D2 is not one physical measurement value, but is a physical measurement value of a specific area within a color space.

That is, in a case in which the physical measurement values as the color feature amount is expressed by an RGB value in an RGB color system, the physical measurement value (RGB value) as a color feature amount corresponding one piece of sensibility word data D2 can be expressed, for example, as show in the following equation.

$$Rmin \leq R \leq Rmax$$

$$Gmin \leq G \leq Gmax$$

$$Bmin \leq B \leq Bmax$$

A physical measurement value (RGB value) corresponding to one piece of the sensibility word data D2 is a physical measurement value in a specific area determined by a lower limit and an upper limit value for each of RGB colors in a color space (RGB space) as shown in [Equation 1] above. It is obvious that the lower limit and the upper limit value for each of the RGB colors shown in [Equation 1] above are different according to the sensibility word data D2. Further, the table for converting the sensibility word into the physical measurement value as the color feature amount among the conversion tables T can be a table that stores the lower limit and the upper limit value for each of the RGB colors, for each piece of the sensibility word data D2.

Further, the present invention is not limited to the case in which the physical measurement value (RGB value) as a color feature amount corresponding to the sensibility word data D2 is determined by the lower limit and the upper limit of each of the RGB colors as described above, and the physical measurement value (RGB value) as a color feature amount corresponding to the sensibility word data D2 can be, for example, a physical measurement value in an area within a predetermined distance on coordinates in a color space from one representative physical measurement value (RGB value) most representative of one sensibility word. Now, if the RGB values of the representative physical measurement value are Ro, Go, and Bo and a certain distance is r, the physical measurement value (RGB) of an area within the predetermined distance r from the representative physical measurement values (Ro, Go, and Bo) can be expressed as shown in the following equation.

$$(R-Ro)^2+(G-Go)^2+(B-Bo)^2 = r^2$$

It is obvious that the representative physical measurement values (Ro, Go, and Bo) and the distance r are different according to the sensibility word data D2. Further, [Equation 2] above, and the representative physical measurement values (Ro, Go, and Bo) and the distance r for each sensibility word may be stored, and the sensibility word may be converted into the physical measurement value based on the conversion equation such as [Equation 2], in place of the table for converting the sensibility word into the physical measurement value as a color feature amount. However, a method of converting the sensibility word into the physical measurement value is not limited to the above example. In short, in the case in which a relationship between the sensibility word and the physical measurement value is determined in advance, the method may be any method as long as the physical measurement value can be obtained from the sensibility word.

The conversion table DB 38a of the conversion unit 38 selects the conversion table T stored in association with the user attribute data D3 based on the user attribute data D3 input from the user ID input unit 35, and converts the sensibility word data D2 (the search word) input from the search reception unit 34 to the physical measurement value D4 of the product image using the selected conversion table T. The conversion unit 38 (conversion table DB 38a) outputs the physical measurement value D4 of the product image converted from the sensibility word data D2 to the search unit 40 and the recording unit 39.

The conversion table calculation unit 38b of the conversion unit 38, and the recording unit 39 will be described in detail below.

Since the conversion table T is determined according to the user attribute data D3 as described above, the physical measurement value D4 corresponding to the attribute word data D2 may also be changed according to the user attribute data D3.

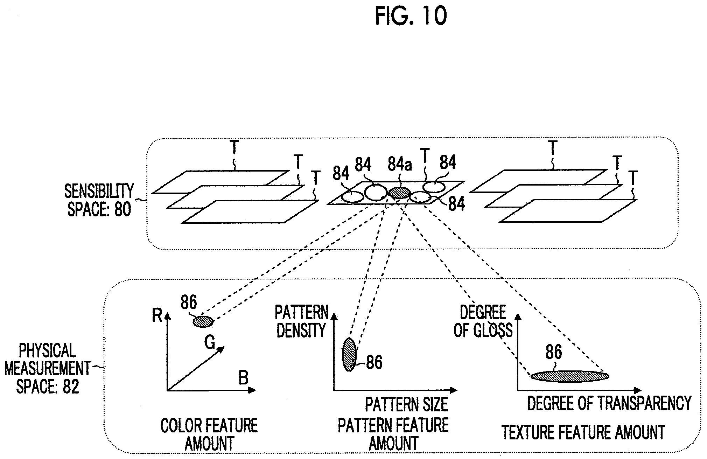

Fig. 10 is a conceptual diagram illustrating a relationship between the sensibility word data D2 (a sensibility space 80) and the physical measurement value D4 (a physical measurement space 82) defined by the conversion table T.

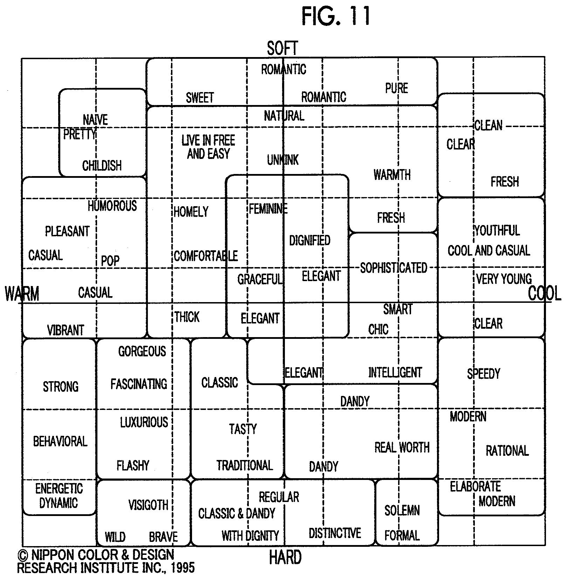

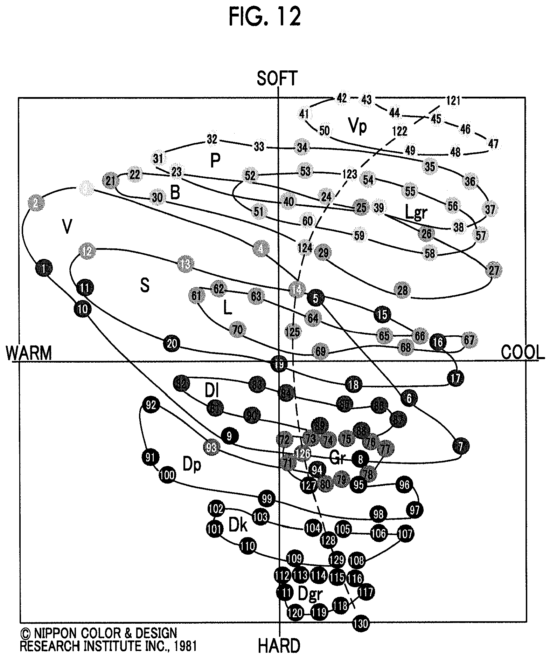

Fig. 11 is a language image scale indicating sensibility words arranged in a sensibility space, and Fig. 12 is a monochromatic image scale of single color (130 colors) arranged in the sensibility space. The image scales illustrated in Figs. 11 and 12 indicate image scales disclosed from Nippon Color & Design Research Institute Inc. (see Shigenobu Kobayashi, "Color System" (Kodansha Ltd.), and http://www.ncd-ri.co.jp/about/image_system.html).

The sensibility spaces illustrated in Figs. 11 and 12 are sensibility spaces defined by a horizontal axis indicating a degree of WARM/COOL (an axis of a first sensibility feature amount) and a vertical axis indicating a degree of HARD/SOFT (an axis of a second sensibility feature amount).

In the language image scale illustrated in Fig. 11, 64 sensibility words are arranged in the sensibility space.

Further, in the monochromatic image scale illustrated in Fig. 12, 130 single color is arranged in the sensibility space. Respective symbols illustrated in Fig. 12 include V (Vivid), S (Strong), B (Bright), P (Pale), Vp (Berry Pale), Lgr (Light Grayish), L (Light), Gr (Grayish), Dl (Dull), Dp (Deep), Dk (Dark), and Dgr (Dark Grayish). Further, as representative colors among 130 colors indicated by numbers, 1 indicates red, 2 indicates orange, 3 indicates yellow, 4 indicates yellow-green, 5 indicates green, 6 indicates blue green, 7 indicates blue, 8 indicates blue-purple, 9 indicates purple, and 10 indicates red-purple. Further, 121 indicates white, and 130 indicates black.

As illustrated in Figs. 11 and 12, it can be seen that there is a correlation between the sensibility word and the physical measurement value (in the example of Fig. 12, single color).

Referring back to Fig. 10, the conversion table T defines an area in the physical measurement space 82 (hereinafter referred to as a "physical amount area 86") corresponding to an area in the sensibility space 80 (hereinafter referred to as a "sensibility area 84"). That is, in a case in which there is the sensibility area 84 assigned to each piece of sensibility word data in the sensibility space 80 (see Fig. 11) and there is the physical amount area 86 physical measurement value in the physical measurement space 82 corresponding to each sensibility area 84 (see Fig. 12). In the example illustrated in Fig. 10, in a case in which a certain sensibility word occupies the sensibility area 84a, a specific physical amount area 86 in the physical measurement space 82 regarding a color feature amount, a pattern feature amount, and a texture feature amount is associated with the sensibility area 84a (see a hatched portion in Fig. 10).

The conversion table T defines an association between the sensibility area 84 of the sensibility word data D2 represented in the sensibility space 80 and the physical amount area 86 cf the physical measurement value D4 represented in the physical measurement space 82, and is used to convert the data in the sensibility space 80 into the data in the physical measurement space 82.

In this embodiment, the conversion table T is prepared for each piece of user attribute data D3, the conversion table T determined by a different criteria is used in a case in which the user attribute data D3 is different, and a specific position of the sensibility area 84 in the sensibility space 80 is different even when the sensibility word is the same. That is, for the same sensibility word, the physical measurement value (for example, a color, a pattern, a texture, or a shape) of the product that is associated from the sensibility word may be different among users whose attributes are different. For example, a physical measurement value (for example, a color, a pattern, a texture, or a shape) of an image of a product associated from a sensibility word "cute (Pretty)" is expected to be greatly different between a "man of 60 years old" and a "women of 10 years old". The conversion unit 38 (conversion table DB 38a) of this embodiment uses the conversion table T according to the user attribute data D3, conversion into the physical measurement value D4 in which a difference in the physical measurement value of the image of the product associated from the sensibility word between users of which the attributes are different is reflected can be performed.

The physical measurement value D4 is not limited to data regarding a single type of physical amount, and may be data regarding a combination of a plurality of types of physical amounts. For example, the physical measurement value D4 may be data regarding a "color of the image of the product" or may be data regarding a combination of the "color of the image of the product" and a "pattern of the image of the product". In a case in which the physical measurement value D4 is the data regarding a combination of a plurality of types of physical measurement values, the physical measurement value D4 may be acquired by weighting each type of physical measurement value.

In the example illustrated in Fig. 10, "color feature amount defined by RGB (red, green, and blue) data", "pattern feature amount defined by a pattern density and a pattern size", and "texture feature amount defined by a degree of gloss and a degree of transparency" are used as a reference for determining the physical amount area 86 in the physical measurement space 82, but the present invention is not limited thereto. For example, a shape feature amount defined by a total width (thin-thick), a size (short-long) of a sleeve, a size (short-long) of a length, a width and a height of a neck line (neck), a cross-sectional area (small-large) of a space for passage of a head of the user defined by the neck line, an angle (small-large) of a V neck, a curvature (small-large) of a U neck, or the like may be used as a reference for determining the physical amount area 86.

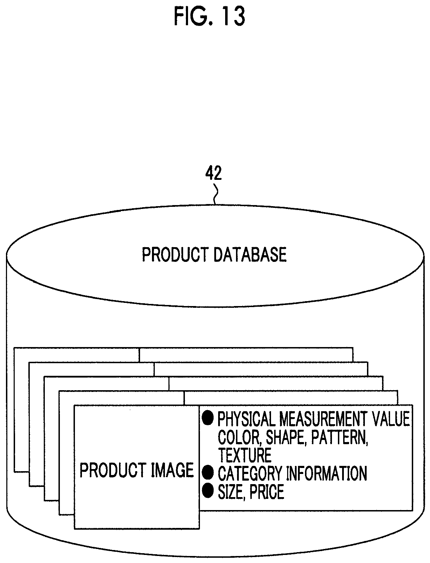

Referring back to Fig. 5, the product database (product DB) 42 stores the image data of the product, the physical measurement values (color, shape, pattern, and texture) of the image of the product, category information, a size (SML), and a price in association with each other, for each product, as illustrated in Fig. 13. Here, the category information indicates a category of the product (clothing), is information such as a blouse, a skirt, pants, a T-shirt, or a one-piece, and is used when a category of the product to be searched for by the user terminal 11 is narrowed down.

The search unit 40 accesses the product DB 42 and searches for the product group associated with the physical measurement value D4 of the image of the product converted by the conversion unit 38 (conversion table DB 38a). Now, in a case in which, as the physical measurement value D4 of the image of the product, a physical measurement value of the color feature amount is a, a physical measurement value of the pattern feature amount is b, a physical measurement value of the texture feature amount is c, and a physical measurement value of the shape feature amount is d, a product of the physical measurement values a to d may be used as a search equation, as shown in the following equation.

$$\text{Search equation} = a \times b \times c \times d$$

That is, the search unit 40 compares the search equation of [Equation 3] above with a product of the physical measurement values (color, shape, pattern, and texture) of each product registered in the product DB 42 and searches for a product group having the physical measurement values included in the search equation. A different weighting coefficient may be multiplied according to the type of physical measurement value of [Equation 3] above and the search equation weighted according to the type of physical measurement value may be obtained. A sum of the physical measurement values a to d may be used as the search equation, instead of the product of the physical measurement values a to d.

The image alignment unit 44 determines a display aspect of the image data of the product acquired through search by the search unit 40, and generates the display information data indicating the determined display aspect. That is, the image alignment unit 44 determines that the display aspect of the image data of the product searched for by the search unit 40 is an aspect in which the image data of the product is displayed according to characteristic data of the product, and generates display information data indicating the determined display aspect.

The display information data generated by the image alignment unit 44 indicates a display aspect in which at least a portion of the image data of the product searched for by the search unit 40 is displayed on a coordinate system 64 representing the characteristic data of the product. The "characteristic data of the product" described here is based on characteristics different from the sensibility word data (search word) that the user specifies through the user terminal 11 among the characteristics of the product. For example, the "characteristic data of the product" may be determined based on data of at least one of the price of the product or the size of the product.

Figs. 14A to 14D illustrate examples of a display aspect of the image data of the product searched for by the search unit 40. In Fig. 14A, a horizontal axis indicates a "size (large and small)" of the product, and a vertical axis indicates "price" of the product. In Fig. 14B, a horizontal axis indicates a "shape (thick and thin)" of the product, and a vertical axis indicates "price" of the product. In Fig. 14C, a horizontal axis indicates "tone (dark and light)" of the product, and a vertical axis indicates "price" of the product. In Fig. 14D, a horizontal axis indicates a "pattern density (dense and sparse)" of the product, and a vertical axis indicates "tone (dark and light)" of the product. A plurality of product images 66 (a product group; a total of nine product images including three product images in a horizontal direction and three product images in a vertical direction in Figs. 14A to 14D) are shown in a coordinate system 64 illustrated in each of Figs. 14A to 14D.

Thus, the image alignment unit 44 (see Fig. 5) generates the display information data indicating the display aspect (see Figs. 14A to 14D) in which the image data (product images 66) of the product acquired through search by the search unit 40 is displayed on the coordinate system 64.

The server transmission unit 31 transmits the search result data (including the image data of the product) acquired by the search unit 40 and the display information data generated by the image alignment unit 44 to the user terminal 11 over the network 12. The search result data and the display information data transmitted by the server transmission unit 31 are received by the terminal reception unit 22 of the user terminal 11 (see Fig. 2). The display control unit 25 determines the display aspect of the image data (product images 66) of the product acquired through the search by the search unit 40 based on the received display information data, and displays the image data (the product image 66) of the product on the display unit 27 according to the determined display aspect (see Figs. 14A to 14D).

The terminal input unit 20 of the user terminal 11 receives request content of an order or the like for any product from the product group displayed as the product image 66, and transmits (outputs) the received request content to the server system 10 via the terminal transmission unit 21. Accordingly, search for the product by the search system 1 including the user terminal 11 and the server system 10 (product search apparatus), and electronic commerce with the action such as purchase for the product that has been searched for are performed.

Next, the conversion table calculation unit 38b and the association recording unit 39 illustrated in Fig. 5 will be described.

The recording unit 39 includes a recording data table 39a and an association recording unit 39b.

If any request information (request information such as an order, and viewing of detailed information of the product) is input from the request reception unit 37, the association recording unit 39b associates the sensibility word data D2, the user attribute data D3, and the physical measurement value D4 that are input at this time, and records the associated data (recording data) in the recording data table 39a.

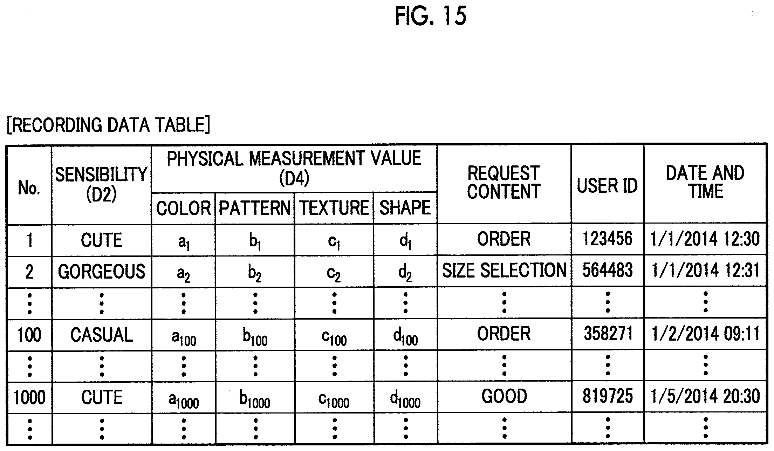

Fig. 15 is a diagram illustrating a list of recording data items recorded in the recording data table 39a.

As illustrated in Fig. 15, the recording data is sequentially recorded in the recording data table 39a in order of a time at which there has been a request. Further, in an example illustrated in Fig. 15, a user ID is directly recorded in place of the user attribute data D3. This is because the user attribute data D3 corresponding to the user ID can be read from the user attribute DB 36 if the user ID is recorded.

In the recording data table 39a, enormous recording data is accumulated in a process of electronic commerce among a large number of users.

The conversion table calculation unit 38b of the conversion unit 38 regularly analyzes the recording data accumulated in the recording data table 39a (association between sensibility word data and physical measurement value) to calculate a new conversion table, and updates the conversion table T of the conversion table DB 38a with the calculated conversion table.

It is preferable for the calculation and the update of the conversion table in the conversion table calculation unit 38b to be performed in every a certain period such as one week or one month or each time the number of recording data newly recorded in the recording data table 39a reaches a certain number (for example, 1,000 or 10,000).

Next, an example of a method of calculating the conversion table in the conversion table calculation unit 38b will be described.

Now, a case in which a relationship between a sensibility word (for example, "cute (Pretty)") and a physical measurement value (RGB value) as a color feature amount for the sensibility word is obtained will be described.

In this case, the conversion table calculation unit 38b acquires the physical measurement value a ($a_1$, $a_{1000}$, ... in the example of Fig. 15) as the color feature amount, which is recorded in association with the sensibility word "cute" among the recording data recorded in the recording data table 39a.

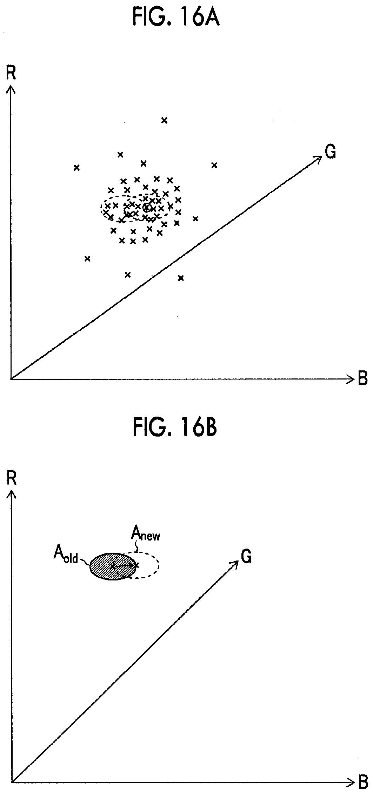

Fig. 16A is a diagram in which the physical measurement value a (RGB value) for the sensibility word "cute" acquired as described above is plotted at coordinates in an RGB color space.

The conversion table calculation unit 38b calculates, for example, a representative physical measurement value representative of the sensibility word "cute" such as an average value, a most frequent value, or a centroid of the physical measurement value a based on a large number of physical measurement values a acquired as described above. The conversion table calculation unit 38b calculates a conversion table in which the physical measurement value in a predetermined range including the calculated representative physical measurement value is associated as the physical measurement value for the sensibility word "cute".

The conversion table calculation unit 38b updates the conversion table T of the conversion table DB 38a with the conversion table calculated as described above.

Fig. 16B is a diagram illustrating a state in which the physical measurement value (an area Aold indicated by oblique lines in the RGB color space) as the color feature amount for the sensibility word "cute" is updated with the physical measurement value (an area Anew indicated by a dotted line) as the color feature amount for the sensibility word "cute" calculated by the conversion table calculation unit 38b.

If the sensibility word data D2 indicating "cute" is input from the search reception unit 34, the conversion table DB 38a converts the sensibility word data D2 into the physical measurement value a in the area Aold in Fig. 16B as the physical measurement value D4 as a corresponding color feature amount and outputs the physical measurement value a, but converts the sensibility word data D2 indicating "cute" into a physical measurement value b as a pattern feature amount, a physical measurement value c as a texture feature amount, and a physical measurement value d as a shape feature amount and outputs the physical measurement values. The search unit 40 searches for a product group having the physical measurement values a to d corresponding to the search equation from the product DB 42 using the search equation shown in [Equation 3] based on the physical measurement values a to d as described above, and presents the product image 66 of the product group that has been searched for, to the user terminal 11.

Therefore, as illustrated in Fig. 16A, products having the physical measurement value a outside the range of the area Aold may also be searched and presented to the user. This is because the products having the physical measurement value a outside the range of the area Aold may satisfy the search equation as a result of multiplying by other physical measurement values b to d. Then, if the user makes a request such as an order of the products having the physical measurement value a outside the range of the area Aold, recording data regarding products having the physical measurement value a outside the range of the area Aold may be registered in the recording data table 39a, as illustrated in Fig. 16A.

Further, even in the case of a search condition under which the products having the physical measurement value a outside the range of the area Aold are not searched for, illustrated in Fig. 16A, the representative physical measurement value representative of the physical measurement value a as a color feature amount recorded in association with the sensibility word "cute" in the recording data recorded in the recording data table 39a may be changed. In a case in which the representative physical measurement value is changed, the physical measurement value (area Anew) in a predetermined range including the representative physical measurement value may be changed.

Thus, a large amount of recording data can be automatically accumulated through the search based on the sensibility word and the request content such as the order in electronic commerce performed by a large number of users, and analyzed to accurately calculate the relationship between the sensibility word indicating the feature of the image of the product and the physical measurement value.

It is preferable for the conversion table calculation unit 38b to perform weighting on the association between the sensibility word and the physical measurement recorded in the recording data table 39a according to the simultaneously recorded request content and to calculate the conversion table based on the association between the weighted association between the sensibility word and the physical measurement value. For example, in a case in which the request content is the order, this means that the user has decided on a purchase, and accordingly, in a case in which the user simply selects a size of the product, the association between the same sensibility word and the physical measurement value is greatly weighted in comparison with a case in which the user views detailed information of the product.

Further, it is preferable for the conversion table calculation unit 38b to acquire the user attribute from the user attribute DB 36 based on the user ID in the recording data, extract the recording data associated with the same user attribute from the recording data table 39a, and calculate the conversion table based on the association between the sensibility word and the physical measurement value in the extracted recorded data.

For example, for the same sensibility word "cute", the impression of the image of the product represented by the sensibility word is different according to gender, age, race, nationality, religion, sect, or the like. Thus, it is preferable to extract the recording data associated with the same user attribute and calculate the conversion table for each user attribute based on the association between the sensibility word and the physical measurement value in the extracted recording data. Further, the recording data of the same person specified by the user ID may be extracted and the conversion table may be calculated based on the association between the sensibility word and the physical measurement value in the extracted recording data.

Further, products associated from the same sensibility word may be changed over time. Therefore, it is preferable for the conversion table calculation unit 38b to extract the recording data recorded in the latest certain period of time from the recording data recorded in the recording data table 39a and calculate the conversion table based on the association between the sensibility word and the physical measurement value in the extracted recording data.

Next, another embodiment in which the conversion table associating the sensibility word with the physical measurement value is calculated based on the recording data (statistical data of the sensibility word and the physical measurement value) registered in the recording data table 39a will be described.

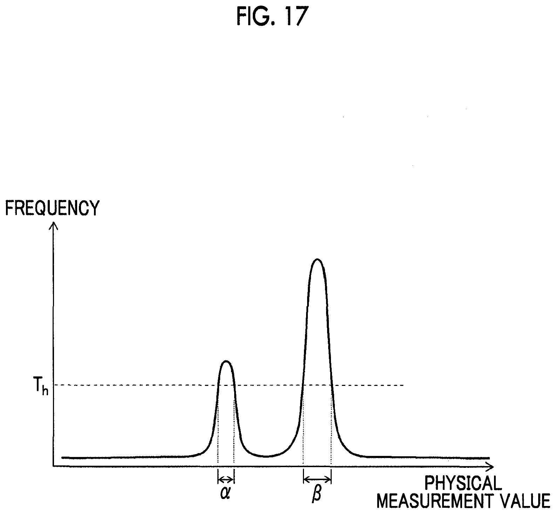

Fig. 17 is a histogram illustrating a relationship between the physical measurement value recorded in association with a specific sensibility word and the number (frequency) of products having the physical measurement value, which is registered in the recording data table 39a. In Fig. 17, the physical measurement value is shown on one axis for simplicity of description.

A threshold value Th can be appropriately set, and ranges $\alpha$ and $\beta$ of the physical measurement values having a frequency exceeding this threshold value Th can be set as the physical measurement value for the specific sensibility word, as illustrated in Fig. 17. In the example illustrated in Fig. 17, the physical measurement values for the specific sensibility word are divided and present in two areas.

Next, a flow of generation of the search process and the recording data table will be described.

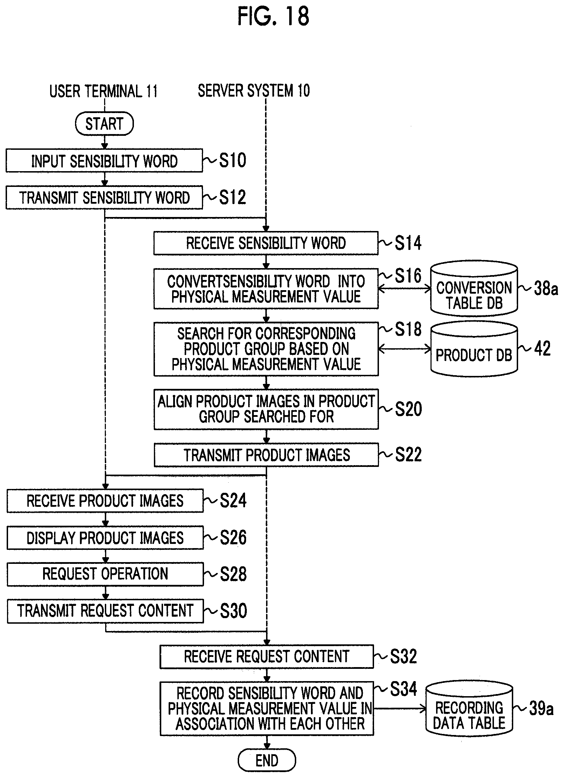

Fig. 18 is a flowchart illustrating a search process and a process of generating a recording data table.

As illustrated in Fig. 18, in a case in which product search is performed in the search system 1 of this embodiment, a user specifies (inputs) sensibility word data D2 as a search word through the terminal input unit 20 (step S10). The sensibility word data D2 specified through the terminal input unit 20 is transmitted to the server system 10 via the terminal transmission unit 21 and the network 12 (step S12), and the sensibility word data D2 transmitted from the user terminal 11 is received by the server reception unit 32 (step S14).

The received sensibility word data D2 is converted into the physical measurement value D4 by the conversion table DB 38a (step S16). Subsequently, the search unit 40 searches for the product group associated with the physical measurement value D4 from the product DB 42 based on the converted physical measurement value D4 (step S18). The image alignment unit 44 aligns the product images of the product group that has been searched for, according to a size, price, or the like (step S20). The product images aligned by the image alignment unit 44 are transmitted to the user terminal 11 via the server transmission unit 31 (step S22).

The product images transmitted from the server system 10 are received by the terminal reception unit 22 (step S24) and displayed on the display unit 27 (step S26).

The user performs a request operation such as an order for the product while viewing the product images through the terminal input unit 20 (step S28). Request content specified for the product is transmitted to the server system 10 via the terminal transmission unit 21 and the network 12 (step S30), and the request content transmitted from the user terminal 11 is received by the server reception unit 32 (step S32).

If the request content for the product is received, the association recording unit 39b creates recording data associated with, for example, the sensibility word data D2, the physical measurement value D4, the request content, the user attribute or the user ID, and date and time, and records the created recording data in the recording data table 39a (step S34).

The product search process and the generation of the recording data table are performed by the above process.

Next, a flow of a process of creating and updating the conversion table T of the conversion table DB 38a will be described.

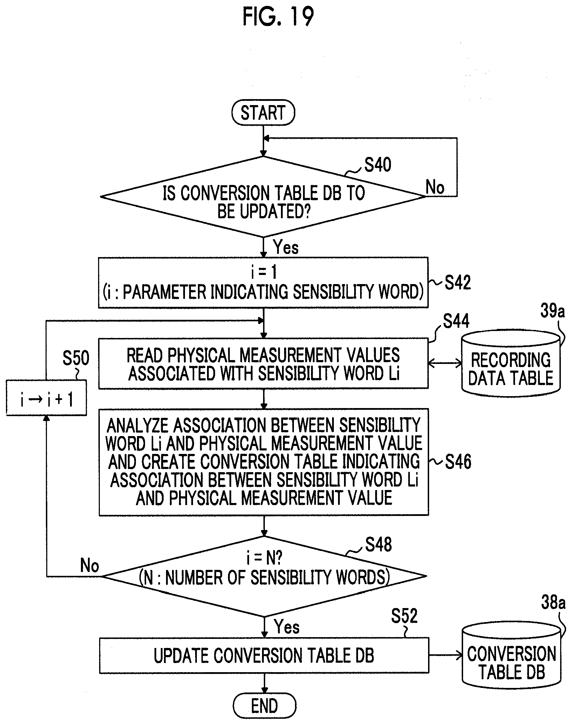

Fig. 19 is a flowchart illustrating the process of creating and updating the conversion table T in the conversion table calculation unit 38b.

First, the conversion table calculation unit 38b determines whether the conversion table T stored in the conversion table DB 38a is to be updated (step S40). This determination is performed, for example, according to whether a certain period of time has elapsed after the conversion table T has been previously updated or whether the number of recording data newly recorded in the recording data table 39a reaches a certain number.

If it is determined by the conversion table calculation unit 38b that the conversion table T is to be updated ("Yes"), a parameter i indicating the sensibility word is set to 1 (step S42). If N sensibility words L are prepared, the N sensibility words L are represented by $L_1$ to $L_N$.

Subsequently, the conversion table calculation unit 38b reads (extracts) the physical measurement values of the images (all of pieces of recording data) of all of the products associated with the sensibility word Li from the recording data table 39a (step S44; see Fig. 15).

The conversion table calculation unit 38b analyzes the association between the sensibility word Li and the physical measurement value among all pieces of the extracted recording data, and creates the conversion table indicating an association between the sensibility word Li and the physical measurement value (step S46). For example, the conversion table calculation unit 38b calculates a representative physical measurement value such as an average value, a most frequent value, or a centroid of the extracted physical measurement value and calculates a conversion table in which the physical measurement value in a predetermined range including the calculated representative physical measurement value is associated as the physical measurement value for the sensibility word Li.

Then, it is determined whether the parameter i indicating the sensibility word reaches the number N of sensibility words (whether i = N) (step S48), and in a case in which the parameter i does not reach ("No"), i is incremented by 1 (step S50), and the process proceeds to step S44. Accordingly, the conversion table is calculated for the other sensibility word, similar to the above.

If it is determined in step S48 that the parameter i has reached N ("Yes"), this means that the conversion table for all sensibility words is calculated. Accordingly, the process proceeds to step S52 in which the conversion table T stored in the conversion table DB 38a is updated (step S52).

While the case in which the conversion table for all users is created has been described in the above embodiment, it is preferable for the conversion table for each user attribute to be created.

Further, the conversion table T first stored in the conversion table DB 38a is not particularly limited and may be, for example, a conversion table appropriately created by one designer or a system engineer. In this case, although the accuracy of the association of the sensibility word and the physical measurement value is lower than that of the conversion table created based on a questionnaire survey by a large number of designers, it is possible to increase the accuracy of the association between the sensibility word and the physical measurement value by repeating the creation and the update of the conversion table as described above. Further, the conversion table T first stored in the conversion table DB 38a may be a conversion table that is not created (for example, a conversion table having the same physical measurement value for all of sensibility words). In this case, by repeating the creation and the update of the conversion table as described above, it is possible to automatically create a conversion table in which accuracy of the association between the sensibility word and the physical measurement value is high.

Further, the present invention is not limited to the above-described embodiments, and it is obvious that various modifications can be made without departing from the spirit of the present invention.

Explanation of References

1: search system
10: server system
11: user terminal
12: network
20: terminal input unit
21: terminal transmission unit
22: terminal reception unit
23: terminal external input and output unit
25: display control unit
27: display unit
28: terminal system controller
31: server transmission unit
32: server reception unit
33: server external input and output unit
34: search reception unit
35: user ID input unit
36: user attribute database
37: request reception unit
38: sensibility word/physical measurement value conversion unit (conversion unit)
38a: conversion table database
38b: conversion table calculation unit
39: recording unit
39a: recording data table
39b: association recording unit
40: search unit
42: product database
44: image alignment unit

**Claims**

1. A product search apparatus that searches for a product desired by a user from a product database in which a search target product and a physical measurement value of the image of the product obtained by analyzing the image of the product are recorded in association with each other, the product search apparatus comprising:

   a recording unit that records a sensibility word representing a feature of the image of the product and a physical measurement value of the image of the product in association with each other;
   a search reception unit that receives a search for the product based on the sensibility word from the user;
   a conversion unit that converts the received sensibility word into the physical measurement value based on a relationship between the sensibility word and the physical measurement value recorded in the recording unit;
   a search unit that searches for a corresponding product group from the product database based on the physical measurement value converted by the conversion unit;
   an output unit that outputs the product group searched for by the search unit; and
   a request reception unit that receives request content for any of the products in the output product group,

   wherein the recording unit records the sensibility word of the product received by the search reception unit and the physical measurement value of the image of the product for which the request content is received in association with each other.

**2.** The product search apparatus according to claim 1,
wherein the conversion unit includes a calculation unit that analyzes the association between the sensibility word and the physical measurement value recorded in the recording unit, and calculates a conversion table or a conversion equation representing a relationship between the sensibility word and physical measurement value, and converts the received sensibility word into the physical measurement value based on the conversion table or the conversion equation calculated by the calculation unit.

**3.** The product search apparatus according to claim 2,
wherein the calculation unit analyzes the association between the sensibility word and the physical measurement value recorded in the recording unit in a latest certain period of time, calculates a conversion table or a conversion equation representing a relationship between the sensibility word and physical measurement value, and performs updating with the calculated conversion table or conversion equation.

**4.** The product search apparatus according to claim 2 or 3,
wherein the recording unit records the sensibility word of the product received by the search reception unit and the physical measurement value of the image of the product for which the request content is received in association with each other, and records at least one of the request content or a user attribute in association with each other.

**5.** The product search apparatus according to claim 4,
wherein the request content includes at least one of an order, a viewing request for detailed information of the product, a delivery time instruction request, a delivery time confirmation request, a size selection request, an evaluation indicating a high evaluation, a recommendation to others, or mail forwarding.

**6.** The product search apparatus according to claim 4 or 5,
wherein the calculation unit performs weighting according to the simultaneously recorded request content on the association between the sensibility word and the physical measurement value recorded in the recording unit, and calculates the conversion table or the conversion equation based on the weighted association between the sensibility word and the physical measurement value.

**7.** The product search apparatus according to claim 4,
wherein the user attributes include at least one of user identification information, gender, age, race, nationality, religion, or sect.

**8.** The product search apparatus according to claim 4 or 7, further comprising:

a user attribute reception unit that receives a user attribute,

wherein the calculation unit extracts an association of the sensibility word and the physical measurement value associated with the user attribute received by the user attribute reception unit among the sensibility words and the physical measurement values recorded in the recording unit, and calculates the conversion table or the conversion equation based on the extracted association between the sensibility word and the physical measurement value.

**9.** The product search apparatus according to any one of claims 2 to 8,
wherein the calculation unit calculates a representative physical measurement value representative of the sensibility word based on a plurality of correspondence relationships between the sensibility word and the physical measurement value recorded in the recording unit, and calculates a conversion table or a conversion equation for performing conversion using a physical measurement value in a predetermined range including the calculated representative physical measurement value as a physical measurement value for the sensibility word.

**10.** The product search apparatus according to any one of claims 1 to 9,
wherein the physical measurement value is at least one of a color feature amount, a shape feature amount, a pattern feature amount, or a texture feature amount of the image of the product.

**11.** The product search apparatus according to any one of claims 1 to 10, further comprising:

an image alignment unit that aligns the images of the product group that is searched for, in a space using size and price as coordinate axes,

wherein the output unit outputs the images of the product group aligned by the image alignment unit.

12. A product search system comprising the product search apparatus according to any one of claims 1 to 11, and a user terminal,

wherein the user terminal includes

a sensibility word selection unit that outputs a sensibility word to the product search apparatus through a user operation at the time of a search for the product;

a display unit that displays an image indicating the product group output from the output unit of the product search apparatus; and

a request operation unit that outputs the request content for a desired product to the product search apparatus based on the images of the product group displayed on the display unit.

13. A server system which is connected to a user terminal over a network, and searches for a product desired by a user from a product database in which a search target product and a physical measurement value of the image of the product obtained by analyzing the image of the product are recorded in association with each other, the server system comprising:

a recording unit that records a sensibility word representing a feature of the image of the product and a physical measurement value of the image of the product in association with each other;

a sensibility word reception unit that receives a sensibility word from the user terminal over the network;

a conversion unit that converts the received sensibility word into the physical measurement value based on a relationship between the sensibility word and the physical measurement value recorded in the recording unit;

a search unit that searches for a corresponding product group from the product database based on the physical measurement value converted by the conversion unit;

a transmission unit that transmits the product group searched for by the search unit to the user terminal; and

a request reception unit that receives request content for any of the products in the transmitted product group from the user terminal,

wherein the recording unit records the sensibility word of the product received by the sensibility word reception unit and the physical measurement value of the image of the product received by the request reception unit in association with each other.

14. A product search method of searching for a product desired by a user from a product database in which a search target product and a physical measurement value of the image of the product obtained by analyzing the image of the product are recorded in association with each other, the product search method comprising:

a process of preparing a recording unit that records a sensibility word representing a feature of the image of the product and a physical measurement value of the image of the product in association with each other;

a search reception process of receiving a search for the product based on the sensibility word from the user;

a conversion process of converting the received sensibility word into the physical measurement value based on a relationship between the sensibility word and the physical measurement value recorded in the recording unit;

a search process of searching for a corresponding product group from the product database based on the physical measurement value converted through the conversion process;

a process of outputting the product group searched for through the search process; and

a process of receiving request content for any of the products in the output product group,

wherein the search reception process includes recording the sensibility word of the product received through the search reception process and the physical measurement value of the image of the product for which the request content is received, in the recording unit, in association with each other.

## FIG. 1

## FIG. 2

# FIG. 3

11

27(20)

50

USER ID

51

PASSWORD

```
Q W E R T Y U I O P
 A S D F G H J K L
  Z X C V B N M Del
123    SPACE    Enter
```

52

19

FIG. 4

11

27(20)

CUTE    NATURAL

CHIC    GORGEOUS

CASUAL

ELEGANT

FORMAL

## FIG. 5

USER TERMINAL 11

10

PRODUCT SEARCH APPARATUS (SERVER SYSTEM)

33 SERVER EXTERNAL INPUT OUTPUT UNIT

31 SERVER TRANSMISSION UNIT

32 SERVER RECEPTION UNIT

34 SEARCH RECEPTION UNIT

SENSIBILITY WORD

38 SENSIBILITY WORD/PHYSICAL MEASUREMENT VALUE CONVERSION UNIT

38a CONVERSION TABLE DB

38b CONVERSION TABLE CALCULATION UNIT

PHYSICAL MEASUREMENT VALUE

40 SEARCH UNIT

44 IMAGE ALIGNMENT UNIT

42 PRODUCT DB

36 USER ATTRIBUTE DB

35 USER ID INPUT UNIT

USER ATTRIBUTE

37 REQUEST RECEPTION UNIT

39 39a RECORDING DATA TABLE

39b ASSOCIATION RECORDING UNIT

RECORDING UNIT

EP 3 113 050 A1

FIG. 6

36

USER ATTRIBUTE DATABASE

D3

USER
IDENTIFICATION
DATA

USER ATTRIBUTE
DATA

D2

D1

D3

FIG. 7

D3

USER ATTRIBUTE DATA

| GENDER DATA | d1 |
| AGE DATA | d2 |
| RACE DATA | d3 |
| NATIONALITY DATA | d4 |
| RELIGION DATA | d5 |
| SECT DATA | d6 |

## FIG. 8

38a

CONVERSION TABLE DATABASE

T

USER ATTRIBUTE DATA | CONVERSION TABLE

D3

D3 | T

## FIG. 9

T

CONVERSION TABLE

| | |
|---|---|
| D2 — SENSIBILITY WORD DATA | PHYSICAL MEASUREMENT VALUE — D4 |
| D2 — SENSIBILITY WORD DATA | PHYSICAL MEASUREMENT VALUE — D4 |
| D2 — SENSIBILITY WORD DATA | PHYSICAL MEASUREMENT VALUE — D4 |
| D2 — SENSIBILITY WORD DATA | PHYSICAL MEASUREMENT VALUE — D4 |

# FIG. 10

SENSIBILITY SPACE: 80

84 84 84a 84
84

PHYSICAL MEASUREMENT SPACE: 82

R
86
G
B
COLOR FEATURE AMOUNT

PATTERN DENSITY
86
PATTERN SIZE
PATTERN FEATURE AMOUNT

DEGREE OF GLOSS
86
DEGREE OF TRANSPARENCY
TEXTURE FEATURE AMOUNT

FIG. 11

SOFT

COOL

WARM

HARD

NAIVE
PRETTY
CHILDISH

SWEET

ROMANTIC
ROMANTIC

NATURAL

PURE

CLEAN
CLEAR

FRESH

HUMOROUS

POP

LIVE IN FREE
AND EASY

UNPINK

WARMTH

PLEASANT
CASUAL

CASUAL

HOMELY

COMFORTABLE

FEMININE

DIGNIFIED

FRESH

YOUTHFUL
COOL AND CASUAL

VERY YOUNG

VIBRANT

THICK

GRACEFUL

ELEGANT

ELEGANT

SOPHISTICATED

SMART
CHIC

CLEAR

GORGEOUS
FASCINATING

CLASSIC

ELEGANT

INTELLIGENT

SPEEDY

STRONG

LUXURIOUS
FLASHY

TASTY

TRADITIONAL

DANDY

DANDY

REAL WORTH

MODERN

RATIONAL

BEHAVIORAL

ENERGETIC
DYNAMIC

VISIGOTH

WILD    BRAVE

REGULAR
CLASSIC & DANDY

WITH DIGNITY

DISTINCTIVE

SOLEMN
FORMAL

ELABORATE
MODERN

# FIG. 12

FIG. 13

42

PRODUCT DATABASE

PRODUCT IMAGE

● PHYSICAL MEASUREMENT VALUE
  COLOR, SHAPE, PATTERN, TEXTURE
● CATEGORY INFORMATION
● SIZE, PRICE

## FIG. 14A

64

PRICE

66

0 → SIZE

SMALL     LARGE

## FIG. 14B

64

PRICE

66

0 → SHAPE

THIN     THICK

## FIG. 14C

64

PRICE

66

0 → TONE

LIGHT     DARK

## FIG. 14D

64

CHROMA

DARK

66

LIGHT → PATTERN DENSITY

SPARSE     DENSE

# FIG. 15

[RECORDING DATA TABLE]

| No. | SENSIBILITY (D2) | PHYSICAL MEASUREMENT VALUE (D4) | | | | REQUEST CONTENT | USER ID | DATE AND TIME |
|---|---|---|---|---|---|---|---|---|
| | | COLOR | PATTERN | TEXTURE | SHAPE | | | |
| 1 | CUTE | $a_1$ | $b_1$ | $c_1$ | $d_1$ | ORDER | 123456 | 1/1/2014 12:30 |
| 2 | GORGEOUS | $a_2$ | $b_2$ | $c_2$ | $d_2$ | SIZE SELECTION | 564483 | 1/1/2014 12:31 |
| ⋮ | ⋮ | ⋮ | ⋮ | ⋮ | ⋮ | ⋮ | ⋮ | ⋮ |
| 100 | CASUAL | $a_{100}$ | $b_{100}$ | $c_{100}$ | $d_{100}$ | ORDER | 358271 | 1/2/2014 09:11 |
| ⋮ | ⋮ | ⋮ | ⋮ | ⋮ | ⋮ | ⋮ | ⋮ | ⋮ |
| 1000 | CUTE | $a_{1000}$ | $b_{1000}$ | $c_{1000}$ | $d_{1000}$ | GOOD | 819725 | 1/5/2014 20:30 |
| ⋮ | ⋮ | ⋮ | ⋮ | ⋮ | ⋮ | ⋮ | ⋮ | ⋮ |

## FIG. 16A

## FIG. 16B

# FIG. 17

# FIG. 18

USER TERMINAL 11          SERVER SYSTEM 10

( START )

| INPUT SENSIBILITY WORD | ~S10 |

| TRANSMIT SENSIBILITY WORD | ~S12 |

| RECEIVE SENSIBILITY WORD | ~S14 |

| CONVERT SENSIBILITY WORD INTO PHYSICAL MEASUREMENT VALUE | ~S16 |  →  CONVERSION TABLE DB ~38a

| SEARCH FOR CORRESPONDING PRODUCT GROUP BASED ON PHYSICAL MEASUREMENT VALUE | ~S18 |  ↔  PRODUCT DB ~42

| ALIGN PRODUCT IMAGES IN PRODUCT GROUP SEARCHED FOR | ~S20 |

| TRANSMIT PRODUCT IMAGES | ~S22 |

| RECEIVE PRODUCT IMAGES | ~S24 |

| DISPLAY PRODUCT IMAGES | ~S26 |

| REQUEST OPERATION | ~S28 |

| TRANSMIT REQUEST CONTENT | ~S30 |

| RECEIVE REQUEST CONTENT | ~S32 |

| RECORD SENSIBILITY WORD AND PHYSICAL MEASUREMENT VALUE IN ASSOCIATION WITH EACH OTHER | ~S34 |  →  RECORDING DATA TABLE ~39a

( END )

# FIG. 19

```
                        ( START )
                            │
                            ▼
                    ◇ S40
         ┌─────────────────────────────────┐   No
         │   IS CONVERSION TABLE DB TO      ├──────┐
         │        BE UPDATED?               │      │
         └─────────────────────────────────┘      │
                            │ Yes                  │
                            ▼                      │
         ┌─────────────────────────────────┐      │
         │             i = 1               │ ~S42 │
         │ (i : PARAMETER INDICATING       │      │
         │       SENSIBILITY WORD)         │      │
         └─────────────────────────────────┘      │
                            │                      │
                            ▼          S44    39a  │
         ┌─────────────────────────────────┐ ┌──────────┐
  S50    │ READ PHYSICAL MEASUREMENT VALUES │ │RECORDING │
         │ ASSOCIATED WITH SENSIBILITY      │◄►│DATA TABLE│
 ┌──────┐│       WORD Li                   │ └──────────┘
 │i → i+1│└─────────────────────────────────┘
 └──────┘            │
                     ▼
         ┌─────────────────────────────────┐
         │ ANALYZE ASSOCIATION BETWEEN      │
         │ SENSIBILITY WORD Li AND PHYSICAL │
         │ MEASUREMENT VALUE AND CREATE     │ ~S46
         │ CONVERSION TABLE INDICATING      │
         │ ASSOCIATION BETWEEN SENSIBILITY  │
         │ WORD Li AND PHYSICAL MEASUREMENT │
         │ VALUE                            │
         └─────────────────────────────────┘
                     │
                     ▼        S48
         ◇───────────────────────────────◇
   No    │            i = N?              │
 ◄───────┤ (N : NUMBER OF SENSIBILITY     │
         │         WORDS)                 │
         ◇───────────────────────────────◇
                     │ Yes       S52   38a
                     ▼                 ┌──────────┐
         ┌─────────────────────────────┐│CONVERSION│
         │  UPDATE CONVERSION TABLE DB  ├►│TABLE DB  │
         └─────────────────────────────┘ └──────────┘
                     │
                     ▼
                 ( END )
```

## INTERNATIONAL SEARCH REPORT

| International application No. |
| --- |
| PCT/JP2015/051245 |

A. CLASSIFICATION OF SUBJECT MATTER
*G06F17/30*(2006.01)i, *G06Q30/06*(2012.01)i

According to International Patent Classification (IPC) or to both national classification and IPC

B. FIELDS SEARCHED

Minimum documentation searched (classification system followed by classification symbols)
G06F17/30, G06Q30/06

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | Haruo KIMOTO, Kazuhiko KUSHIMA, Hitoshi SHIBAGAKI, "Establishing an image retrieval technology based on sensibility words", NTT Gijutsu Journal, 01 October 1998 (01.10.1998), vol.10, no.10, pages 109 to 111 | 1-14 |
| A | JP 2012-79028 A  (Hitachi Solutions, Ltd.), 19 April 2012 (19.04.2012), paragraphs [0020] to [0034]; fig. 4 to 8 (Family: none) | 1-14 |

☐  Further documents are listed in the continuation of Box C.          ☐  See patent family annex.

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>23 February 2015 (23.02.15) | Date of mailing of the international search report<br>03 March 2015 (03.03.15) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8249351 A
- JP H08249351 A
- JP 9114853 A
- JP H09114853 A